# FASCICULE DE BREVET EUROPEEN

(11) **EP 1 436 525 B1**
(45) Date de publication et mention de la délivrance du brevet: **01.06.2005**
(21) Numéro de dépôt: 02785501.4
(22) Date de dépôt: 16.09.2002
(51) Int. Cl.: F16H 1/28

(54) **REDUCTEUR A TRAIN EPICYCLOIDAL NOTAMMENT POUR DEMARREUR DE VEHICULE AUTOMOBILE ET DEMMARREUR EQUIPE D'UN TEL REDUCTEUR**
PLANETENGETRIEBEUNTERSETZUNGSMECHANISMUS, INSBESONDERE FÜR KRAFTFAHRZEUGSTARTER UND DAMIT AUSGESTATTETER STARTER
PLANETARY GEAR REDUCTION MECHANISM IN PARTICULAR FOR MOTOR VEHICLE STARTER AND STARTER EQUIPPED WITH SAME

(30) Priorité: 14.09.2001 FR 0111929
(43) Date de publication de la demande: 14.07.2004
(73) Titulaire: VALEO EQUIPEMENTS ELECTRIQUES MOTEUR, 94017 Creteil (FR)
(72) Inventeur: CHANE-WAYE, Olivier, F-69003 Lyon (FR); LIU, Zeng, Gang, F-78780 Maurecourt (FR)
(86) Numéro de dépôt international: PCT/FR2002/003137
(87) Numéro de publication internationale: WO 2003/025423

(56) Documents cités:
- EP-A- 0 622 557
- FR-A- 1 222 610
- US-A- 4 503 719

## Description

### Domaine technique de l'invention

L'invention concerne un réducteur à train épicycloïdal notamment pour démarreur de véhicule automobile, du type comportant une couronne qui comprend une partie de couronne extérieure montée fixe dans la carcasse du démarreur et une partie de couronne intérieure montée coaxialement dans la partie externe et portant une denture intérieure engrenant les roues planétaires du réducteur et des éléments d'amortissement de chocs interposés entre des faces de butée prévues sur la face périphérique interne de la partie de couronne extérieure et la face périphérique extérieure de la partie de couronne interne, et un démarreur équipé d'un tel réducteur.

### Etat de la technique

Un réducteur à train épicycloïdal pour démarreur de véhicule automobile, de ce type, est connu par le brevet US No. 4 503 719. Ce démarreur présente l'inconvénient majeur que les blocs amortisseur sont sollicités non seulement en compression mais également en distorsion ce qui raccourcie considérablement leur durée de vie.

### Objet de l'invention

La présente invention a pour but de pallier cet inconvénient.

Pour atteindre ce but, le réducteur selon l'invention est caractérisé en ce que les éléments amortisseurs sont réalisés sous forme de plaques disposées dans des logements formés par des évidements de forme complémentaire pratiqués respectivement dans la face extérieure périphérique de la couronne interne et dans la face périphérique interne de la partie de couronne extérieure, chaque évidement ayant une profondeur qui augmente dans une direction de déplacement angulaire relative entre les deux parties de couronne, à partir de la surface périphérique à une valeur sensiblement égale à l'épaisseur de la plaque.

Selon une caractéristique de l'invention, il y a autant d'évidements et de plaques orientés dans un sens du déplacement angulaire relatif que dans l'autre sens de déplacement angulaire.

Le démarreur selon l'invention est caractérisé en ce qu'il comprend un réducteur selon l'invention.

### Description sommaire des dessins

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en coupe axiale partielle de démarreur du type à réducteur à train épicycloïdal selon l'état de la technique ;
- les figures 2A et 2B illustrent un réducteur selon l'invention, par des vues respectivement en perspective éclatée et à l'état assemblé.

### Description détaillée de modes de réalisation préférentiels de l'invention

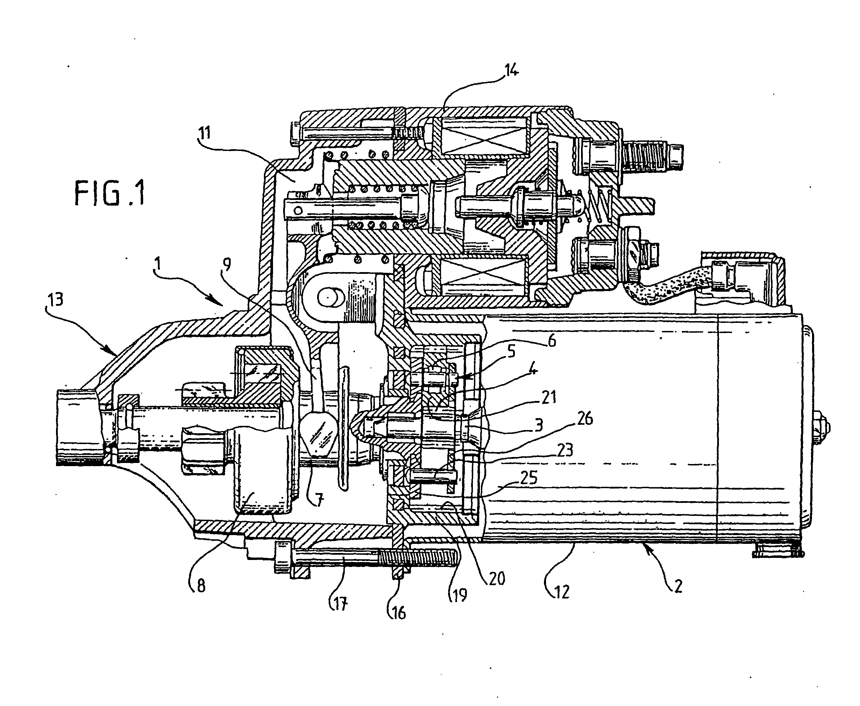

En se référant à la figure 1 on décrira tout d'abord un démarreur 1 de véhicule automobile du type à train épicycloïdal, de l'état de la technique, pour démontrer la structure générale d'un démarreur à laquelle est incorporé le dispositif de couronne de réducteur selon l'invention.

Selon la figure 1, un démarreur connu 1 comporte un moteur électrique 2 comprenant un induit qui entraîne un arbre 3 portant, à son extrémité libre, un pignon 4. Un réducteur 5 à train épicycloïdal 6 est interposé entre le pignon 4 et un arbre de lanceur 7 coaxial à l'arbre de sortie 3 du moteur électrique 2, le lanceur 8 étant déplaçable sur l'arbre 7 par l'intermédiaire d'un levier 9 en forme de fourche d'un contacteur électromagnétique 11 disposé dans la partie supérieure du démarreur. Le moteur électrique 2 et le réducteur sont enfermés dans une carcasse 12 à laquelle est fixée une partie avant en forme de capot 13 sur laquelle est également monté le carter 14 du contacteur 11.

Le réducteur 5 comporte une plaque de base 16 fixée sur la carcasse 12 et le carter 14, par des vis 17 de fixation du capot 13 sur la carcasse 12 et le carter 14, et une couronne 19 surmoulée sur la plaque 16 dans le démarreur représenté.

La couronne 19 comporte une denture intérieure 20 qu'engrène les roues satellites 21 du train épicycloïdal 6. Les satellites sont montés sur des axes 23 portés par un plateau porte-satellites 25 solidaire en rotation de l'arbre de lanceur 7 et immobilisé axialement en translation par une plaque 26 emmanchée à force sur les axes de satellites 23.

L'invention concerne spécifiquement la réalisation de la couronne d'un réducteur notamment pour un démarreur du type représenté sur la figure 1.

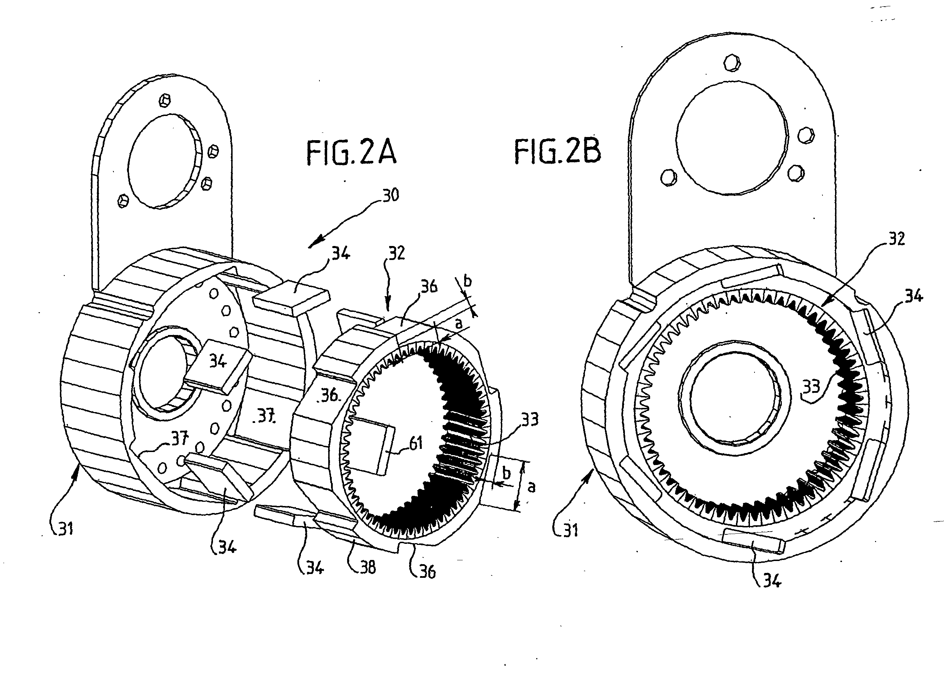

Comme on le voit sur les figures 2A et 2B, une telle couronne désignée par la référence 30 est réalisée en deux parties, une partie extérieure 31 formant boîtier et un organe de couronne intérieur 32 qui est monté coaxialement à l'intérieur du boîtier de couronne 31 et est pourvu d'une denture intérieure 33 engrenant les roues planétaires du réducteur. Dans l'exemple représenté six éléments 34 en un matériau d'amortissement de chocs, tels que par exemple du caoutchouc ou de l'élastomère, sont interposés entre le boîtier 31 et l'organe de couronne intérieure 32.

Chaque élément amortisseur 34 est réalisé sous forme d'une plaque que l'on place dans un logement formé par deux évidements de forme complémentaire 36, 37 pratiqués respectivement dans la face périphérique extérieure 38 de la couronne interne 32 et la face périphérique interne 39 du boîtier 31. Chaque évidement 36, 37 est configuré de façon que sa profondeur augmente progressivement dans la direction périphérique, c'est-à-dire dans la direction de déplacement angulaire relative entre le boîtier et la couronne, à partir de la surface correspondante sur une longueur a, jusqu'à une valeur b sensiblement égale à l'épaisseur de la plaque d'amortissement 34, la longueur a de l'évidement étant sensiblement égale à la dimension de la plaque dans cette direction. On constate qu'il y a autant d'évidements 36, 37 et de plaques 34 qui sont orientés dans un sens de déplacement angulaire que dans l'autre. Par conséquent l'effet d'amortissement est le même dans les deux directions du déplacement angulaire relatif entre le boîtier et la couronne interne.

Etant donné que les éléments amortisseur 34 sont positionnés en direction tangentielle par rapport aux deux parties de réducteur 31, 32 ils travaillent en compression et non pas en distorsion, ce qui augmente considérablement leur durée de vie.

Il est encore à noter que les plaques d'amortissement 34 qui sont orientées dans la même direction circonférentielle peuvent avoir une longueur a différente de celle des plaques orientées dans l'autre direction, la longueur la plus importante étant attribuée aux plaques placées dans le sens inverse de la rotation du moteur électrique, c'est-à-dire suivant le sens des chocs.

## Revendications

1. Réducteur à train épicycloïdal, notamment pour démarreur de véhicule automobile, du type comportant une couronne qui comprend une partie de couronne extérieure montable de manière fixe dans la carcasse du démarreur et une partie de couronne intérieure montée coaxialement dans la partie externe et portant une denture intérieure engrenant les roues planétaires du réducteur, et des éléments d'amortissement de chocs interposés entre les faces de butée prévues sur la face périphérique interne de la partie de couronne extérieure et la face périphérique extérieure de la partie de couronne interne, **caractérisé en ce que** les éléments amortisseur (34) sont réalisés sous forme de plaques disposées dans des logements formés par des évidements (36, 37) de forme complémentaire pratiqués respectivement dans la face extérieure périphérique (38) de la couronne interne (32) et dans la face périphérique interne (39) de la partie de couronne extérieure (31)., chaque évidement ayant une profondeur qui augmente dans une direction de déplacement angulaire relative entre les deux parties de couronne, à partir de la surface périphérique, sur une longueur (a) correspondant à la longueur de la plaque, jusqu'à une valeur (b) sensiblement égale à l'épaisseur de la plaque.

2. Réducteur selon la revendication 1, **caractérisé en ce qu'**il y a autant d'évidements (36, 37) et de plaques (34), orientés dans un sens du déplacement angulaire relatif que dans l'autre sens du déplacement angulaire.

3. Réducteur selon la revendication 1, **caractérisé en ce que** les plaques d'amortissement (34) présentent la même longueur précitée a.

4. Réducteur selon la revendication 1, **caractérisé en ce que** les plaques d'amortissement (34), qui sont orientées dans une même direction périphérique ont une longueur précitée (a) différente de celle de plaques (34) orientées dans l'autre direction, la longueur la plus importante étant attribuée aux plaques orientées dans le sens inverse de la rotation du moteur électrique du démarreur.

5. Démarreur de véhicule automobile, **caractérisé en ce qu'**il est équipé d'un réducteur selon l'une des revendications 1 à 4.

## Patentansprüche

1. Untersetzungsgetriebe mit Planetengetriebezug, insbesondere für einen Kraftfahrzeuganlasser, mit einem Hohlrad, das einen ortsfest im Gehäuse des Anlassers lagerbaren äußeren Hohlradteil und einen inneren Hohlradteil umfaßt, der koaxial im äußeren Teil gelagert ist und eine Innenzahnung trägt, die an den Planetenrädern des Untersetzungsgetriebes eingreift, und mit Stoßdämpfungselementen, die zwischen an der inneren Umfangsfläche des äußeren Hohlradteils und an der äußeren Umfangsfläche des inneren Hohlradteils vorgesehenen Anschlagflächen eingefügt sind, **dadurch gekennzeichnet, daß** die Dämpferelemente (34) in Form von Platten ausgeführt sind, die in Aufnahmen gelagert sind, die durch formschlüssige Ausnehmungen (36, 37) gebildet werden, die in die äußere Umfangsfläche (38) des inneren Hohlrads (32) bzw. in die innere Umfangsfläche (39) des äußeren Hohlradteils (31) eingearbeitet sind, wobei jede Ausnehmung eine Tiefe aufweist, die sich in einer relativen Winkelverschiebungsrichtung zwischen den beiden Hohlradteilen von der Umfangsfläche aus auf einer Länge (a) entsprechend der Länge der Platte bis zu einem Wert (b) in etwa gleich der Dicke der Platte vergrößert.

2. Untersetzungsgetriebe nach Anspruch 1, **dadurch gekennzeichnet, daß** es ebenso viele in einer Richtung der relativen Winkelverschiebung ausgerichtete Ausnehmungen (36, 37) und Platten (34) wie in der anderen Richtung der Winkelverschiebung gibt.

3. Untersetzungsgetriebe nach Anspruch 1, **dadurch gekennzeichnet, daß** die Dämpfungsplatten (34) die gleiche vorerwähnte Länge (a) aufweisen.

4. Untersetzungsgetriebe nach Anspruch 1, **dadurch gekennzeichnet, daß** die Dämpfungsplatten (34), die in einer gleichen Umfangsrichtung ausgerichtet sind, eine vorerwähnte Länge (a) aufweisen, die verschieden von derjenigen der in der anderen Richtung ausgerichteten Platten (34) ist, wobei die größere Länge den in der Gegenrichtung zur Drehung des Elektromotors ausgerichteten Platten zugeordnet ist.

5. Kraftfahrzeuganlasser, **dadurch gekennzeichnet, daß** er mit einem Untersetzungsgetriebe nach einem der Ansprüche 1 bis 4 ausgerüstet ist.

## Claims

1. A reduction gearbox with an epicyclic gear train, especially for a motor vehicle starter, of the type including a crown which comprises an outer crown part adapted to be fixedly mounted within the carcass of the starter, and an inner crown part which is mounted coaxially in the outer part and which carries an internal set of teeth in mesh with the planet wheels of the reduction gear train, together with shock-absorbing damping elements which are interposed between the abutment faces formed on the inner peripheral face of the outer crown part and the outer peripheral face of the inner crown part, **characterised in that** the damping elements (34) are made in the form of plates disposed in seatings which consist of recesses (36, 37) of complementary form, formed respectively in the outer peripheral face (38) of the inner crown part (32) and in the inner peripheral face (39) of the outer crown part (31), each recess having a depth which increases in a direction of relative angular displacement between the two crown parts, considered from the peripheral surface, over a length (a) which corresponds to the length of the plate, to a value (b) which is substantially equal to the thickness of the plate.

2. A reduction gearbox according to Claim 1, **characterised in that** there are as many recesses (36, 37) and plates (34) oriented in one direction of relative angular displacement as there are recesses and plates oriented in the other direction of angular displacement.

3. A reduction gearbox according to Claim 1, **characterised in that** the damping plates (34) have the same said length a.

4. A reduction gearbox according to Claim 1, **characterised in that** the damping plates (34) which are oriented in a common peripheral direction have a said length (a) different from that of plates (34) oriented in the other direction, the greater of the said lengths being attributed to the plates oriented in the reverse direction of rotation of the electric motor of the starter.

5. A motor vehicle starter, **characterised in that** it is equipped with a reduction gearbox according to one of Claims 1 to 4.
